# EUROPÄISCHE PATENTSCHRIFT

(11) **EP 4 005 528 B1**
(45) Veröffentlichungstag und Bekanntmachung des Hinweises auf die Patenterteilung: **09.10.2024**
(21) Anmeldenummer: 21206149.3
(22) Anmeldetag: 03.11.2021
(51) Int. Cl.: A61C 7/28, A61C 7/14

(54) **CLIP FÜR EIN KIEFERORTHOPÄDISCHES BRACKET**
CLIP FOR AN ORTHODONTIC BRACKET
PINCE POUR UNE ATTACHE D'ORTHOPÉDIE MAXILLAIRE

(30) Priorität: 19.11.2020 DE 102020214586
(43) Veröffentlichungstag der Anmeldung: 01.06.2022
(73) Patentinhaber: DW Lingual Systems GmbH, 49152 Essen (DE)
(72) Erfinder: WIECHMANN, Dirk, 49152 Bad Essen (DE)
(74) Vertreter: Taruttis, Stefan Georg

(56) Entgegenhaltungen:
- US-A1- 2012 135 364
- US-A1- 2013 171 579
- US-A1- 2015 173 859
- US-A1- 2017 245 963
- US-A1- 2018 042 700

## Beschreibung

Die Erfindung betrifft ein Bracket mit einem Clip.

Für die kieferorthopädische Behandlung von Patienten mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody mit einem Slot auf, der den Drahtbogen aufnimmt, wobei ein Clip an dem Bracketbody vorgesehen ist, um den Drahtbogen in dem Slot zu halten.

Die Brackets können Lingual- oder Bukkalbrackets sein, d.h. zur Anordnung auf der Lingual- bzw. Bukkalsseite der Zähne des Patienten vorgesehen sein.

Zu Beginn einer kieferorthopädischen Behandlung werden häufig kieferorthopädische Drähte aus einem Formgedächtnismaterial in die Brackets eingesetzt, um eine "grobe" Ausrichtung der Zähne zu erreichen. Erst gegen Ende der kieferorthopädischen Behandlung werden bspw. Stahldrähte verwendet, um die Zähne möglichst genau in eine definierte Position zu bewegen. Der Drahtbogen wie auch der Clip können aus einem Formgedächtnismaterial bestehen.

Zu den wichtigsten Formgedächtnismaterialien zählen Cu-Zn-X (X: Si, Sn, Al)- Legierungen und die intermetallische NiTi-Legierung (Nickelgehalt von ca. 55 gew.%), wobei die NiTi-Legierung aufgrund günstigerer Eigenschaften eine größere technologische Bedeutung erlangen konnte.

Der Formgedächtnis-Effekt beruht auf einer thermoelastischen Martensitumwandlung, einer reversiblen, durch Scherung der Gitterebenen bedingten Phasenumwandlung. Die Abkühlung der Hochtemperatur-Phase, genannt Austenit, unter die legierungsspezifische Martensitstarttemperatur führt zu der Phasenumwandlung ohne Gestaltänderung und ohne irreversible plastische Verformung, wie es bei Stählen der Fall ist.

Formgedächtnislegierungen lassen sich im martensitischen Zustand leicht verformen; die reversible Verformung kann bis zu 8% bei NiTi betragen. Diese Verformung ist bleibend, solange sich die Legierung im martensitischen Zustand befindet. Die Erwärmung oberhalb der legierungsspezifischen Austenitstarttemperatur führt dann zur Rückstellung der ursprünglichen Gestalt.

Um ein kieferorthopädisches Bauteil aus einem Formgedächtnismaterial in eine Zielgeometrie zu überführen, wird dieser in einer speziellen Backform in die gewünschte Zielgeometrie gebracht und dann auf eine für das Formgedächtnismaterial spezifische Sprungtemperatur erhitzt. Anschließend wird das kieferorthopädische Bauteil wieder abgekühlt und in eine kieferorthopädische Apparatur eines Patienten, bspw. festsitzende Lingual- oder Bukkalbrackets, unter Verformung eingesetzt. In dem Mund des Patienten wird das elastisch verformte Bauteil, bspw. ein Drahtbogen oder ein Clip, wieder erwärmt und erinnert sich an seine Zielgeometrie, in die es sich dann zurückverformen will.

Aus der DE102017211867A1 ist eine Anordnung mit einem Bracket mit einem Pad und einem Bracketbody mit einem Slot zur Aufnahme eines kieferorthopädischen Drahtes sowie einen dem Bracket zugeordneten Clip aus einem Formgedächtnismaterial zum Verschließen und Freigeben des Slots des Brackets, um den kieferorthopädischen Draht in einer Schließstellung in dem Slot zu halten bzw. ihn in einer Öffnungsstellung zur Entnahme aus dem Slot frei zu geben. Ein erstes Ende des Clips ist ein Fixierende, das fest mit dem Bracket verbunden ist. Ein zweites Ende des Clips ist ein Freiende ist, das in der Öffnungsstellung an dem Bracket den Slot freigebend anliegt und in der Schließstellung an dem Bracket den Slot übergreifend anliegt.

Ein Nachteil des bekannten Clips ist, dass das Fixierende fest mit dem Brackebody zu verbunden ist, was in der Fertigung aufwändig ist. Ein weiterer Nachteil ist, dass der Drahtbogen im Slot zu viel Spiel hat bzw. der Clip den Drahtbogen nicht ausreichend fest hält, wodurch es bei einem horizontalen Slot einer Kippung des Drahtbogens im Slot und bei einem vertikalen Slot einer Angulation des Drahtbogens im Slot kommen kann.

Aus der CA 2 994 745 A1 ist ein Bracket mit einem Pad, einem Bracketbody und einem Slot in dem Bracketbody bekannt, wobei in dem Slot ein kieferorthopädischer Draht anordnbar ist. Um den Draht in dem Slot zu halten, ist ein Clip vorgesehen. Der Clip weist in der Querschnittsansicht im Wesentlichen eine C-Form auf, wobei ein Bracketbodyende des Clips in dem Bracketbody rein translatorisch verschieblich geführt ist und ein Drahtende des Clips in einer ersten Stellung den Slot übergreift, um den Draht in dem Slot zu halten, und in einer zweiten Stellung auf dem Bracketbody angeordnet ist, um den Draht zu wechseln. Das Bracketbodyende des Clips ist in einem Kanal in dem Bracketbody translatorisch verschieblich, wobei zu diesem Zweck ein Führungskanal in dem Bracketbody vorgesehen ist. Der Führungskanal ist entsprechend linear ausgebildet, um das Bracketbodyende des Clips rein translatorisch in dem Bracketbody zu führen. Nachteilig bei dieser Anordnung ist, dass sich Speisereste oder Ablagerungen von Speichel in dem Führungskanal ablagern können und diese die Führung des Bracketbodyendes des Clips in dem Führungskanal erschweren.

Die US 2020/0375699 A1 zeigt eine festsitzende kieferorthopädische Apparatur, die Brackets aufweist, die an dem Zahn eines Patienten befestigt sind. Die Brackets weisen ein Pad, einen Bracketbody und einen Clip auf, wobei der Clip in der Querschnittsansicht eine C-Form aufweist. Ein Bodyende des Clips ist an dem Bracketbody fixiert und ein Freiende des Clips ist schwenkbar - in Richtung auf das fixe Bodyende zu und weg von diesem - angeordnet. In einem Inneren der C-Form, begrenzt von den beiden gegenüberliegenden Enden des Clips, kann ein Draht angeordnet werden. Der Draht kann sich innerhalb des Inneren der C-Form des Clips frei bewegen. Ein Slot zur definierten Führung des Drahts ist somit nicht vorgesehen. Der Clip, die Anordnung von dem Clip an dem Bracketbody und die Funktion des Clips sind somit nicht für das Halten des Drahts in einem Slot vorgesehen.

Die US2015/0173859A1, die US2018/0042700A1, die US2017/0245963A1, die US2013/0171579A1 und die US2012/0135364A1 zeigen jeweils Brackets mit einem Bracketbody, einem Pad und einem Slot, wobei in dem Bracketbody nahe dem Pad ein Clipführungskanal für einen Clip senkrecht zu dem Slot gebildet ist. Ein zugehöriger Clip weist einen linear verlaufenden Clipführungsabschnitt zur Aufnahme in dem linearen Clipführungskanal des Brackets auf und weist ein gegenüberliegendes Ende zum Übergreifen des Slots bzw. des darin angeordneten Drahtes auf. Übergreift der Clip den Slot, so steht das freie Ende des Clipführungsabschnitts über den Bracketbody vor: s. Fig. 1 in der US2015/0173859A1, Fig. 6, 10 und 13 in der US2018/0042700A1, Fig. 5 in der US2017/0245963A1, Fig. 10 in der US2013/0171579A1 und Fig. 5 in der US2012/0135364A1.

Mit einer derartigen Anordnung sind mehrere Nachteile verbunden: Zum einen stört der Clipführungskanalabschnitt im Mundraum des Patienten, bspw. die Zunge. Zum anderen ist ein längs durch den Bracketbody verlaufender Clipführungskanal nachteilig, da sich in diesem Speisereste festsetzen und Verhärtungen, bspw. Verkalkungen bilden, so dass es häufig schwierig ist, den Clip nach einiger Zeit im Mund des Patienten von dem Bracket zu lösen. Die Verkrustungen in dem Clipführungskanal verhindern das Verschieben des Clips relativ zu dem Bracket.

Aufgabe der vorliegenden Erfindung ist es daher, einen Clip für ein Bracket bereit zu stellen, der eine einfache Handhabung am Bracket erlaubt und den Drahtbogen gut im Slot hält.

Die Aufgabe wird erfindungsgemäß durch einen Bracket mit einem C-förmigen Clip gelöst. Vorteilhaft weist der Bracketbody eine Bracketbodyrampe zum Aufschieben der Halteauflagerampe auf.

Bevorzugt weist die Bracketbodyrampe eine Bracketbodyhaltenase zum Zusammenwirken mit einer Cliprampennase, insbesondere am Übergang Halteauflagenrampe zu C-Form des Clips, auf, um den Clip im geöffneten Zustand am Bracket zu halten, wobei in diesem Zustand der Führungsabschnitt des Clips in Eingriff mit der Clipaufnahme des Brackets steht, so dass der Clip durch seine C-Form elastisch am Bracket gehalten ist.

Erfindungsgemäß setzt sich ein Ende der C-Form des Clips in einen Führungsabschnitt fort, der zum führenden Eingriff in eine Clipaufnahme des Brackets vorgesehen ist, um den Clip schwenkbar an dem Bracket zu halten, und sich das andere Ende der C-Form in eine sich in medial-lateral verbreiternde Halteauflage fortsetzt, um den kieferorthopädischen Draht im Slot zu halten.

Mit Vorteil weist der Führungsabschnitt des Clips einen in medialer Richtung und einen in lateraler Richtung vorstehenden Führungsvorsprung auf, wobei sich die Führungsvorsprünge in medial-lateraler Richtung gegenüberliegen und / oder 0,1 bis 0,8mm, insbesondere 0,2mm, vorstehen.

Bevorzugt verringert sich eine Dicke der Halteauflage des Clips in Richtung des freien Endes, insbesondere linear, um die Halteauflage elastisch zu bilden und ein Aufschieben der Halteauflage auf den kieferorthopädischen Draht bzw. das Bracket zu erleichtern.

Vorteilhaft weist die Halteauflage des Clips eine in kaudaler Richtung gebogene Halteauflagenrampe auf, um ein Aufschieben der Halteauflage auf den kieferorthopädischen Draht bzw. das Bracket zu erleichtern.

Bevorzugt weist die Halteauflage des Clips einen Eingriffabschnitt, insbesondere als Vorsprung gebildet, bspw. als Kugel oder Haken, auf, um ihn in Eingriff mit einem Gummi oder einer Ligatur zu bringen und/oder um das Ende des Clips, das die Halteauflage aufweist, von dem Bracket weg zu bewegen, insbesondere weg zu schieben, oder auf das Bracket hin zu bewegen, insbesondere auf das Bracket zu schieben, um so den Clip zu öffnen oder zu schließen, insbesondere per Hand.

Vorteilhaft weist ein OK-Clip eine Länge von 2-8mm, insbesondere 3,5mm, und/oder eine Dicke von 0,2 bis 0,6mm, insbesondere von 0,3mm, und/oder eine Breite von 0,5 bis 2,5mm, insbesondere 1,1mm, und ein UK-Clip eine Länge von 2-8mm, insbesondere 3,5mm, und/oder eine Dicke von 0,2 bis 0,6mm, insbesondere von 0,3mm, und/oder eine Breite von 0,5 bis 2,5mm, insbesondere 0,9mm, auf.

Bevorzugt weist die Halteauflage des Clips am Übergang in die C-Form eine Dicke von 0,2 bis 0,6mm und am freien Ende eine Dicke von 0,05 bis 0,3mm, insbesondere 0,1mm, und / oder am freien Ende eine Breite von 1 bis 8mm, insbesondere 2,6mm, und eine Länge von 0,5 bis 3mm, insbesondere 1,2mm, auf.

Mit Vorteil besteht der Clip aus einem Formgedächtnismaterial, insbesondere aus einer superelastischen NiTi-Legierung.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: a) eine perspektivische Ansicht mehrerer Cliprohlinge zur Herstellung eines erfindungsgemäßen Clips für Lingualbrackets eines Oberkiefers und b) eine perspektivische Ansicht mehrerer Cliprohlinge zur Herstellung eines erfindungsgemäßen Clips für Lingualbrackets eines Unterkiefers,
- Fig. 2: a) eine erste perspektivische Ansicht und b) eine zweite perspektivische Ansicht und c) eine Seitenansicht und d) eine Druntenansicht eines erfindungsgemäßen Clips,
- Fig. 3: a) eine perspektivische Ansicht, b) eine Rückansicht und c) eine Seitenansicht eines Bracketbody mit einem Slot, wobei in dem Slot ein Abschnitt eines kieferorthopädischen Drahtes angeordnet ist,
- Fig. 4: a) eine perspektivische Ansicht und b) eine Seitenansicht des Bracketbody der Fig. 3, wobei auf dem Bracketbody der Clip der Fig. 2 angeordnet ist, wobei der Clip derart an dem Bracketbody angeordnet ist, dass der Slot frei gegeben ist (Freigabestellung), und
- Fig. 5: a) eine perspektivische Ansicht und b) eine Seitenansicht des Bracketbody der Fig. 3, wobei auf dem Bracketbody der Clip der Fig. 2 angeordnet ist, wobei der Clip derart an dem Bracketbody angeordnet ist, dass der Slot nicht frei gegeben ist (Schließstellung).

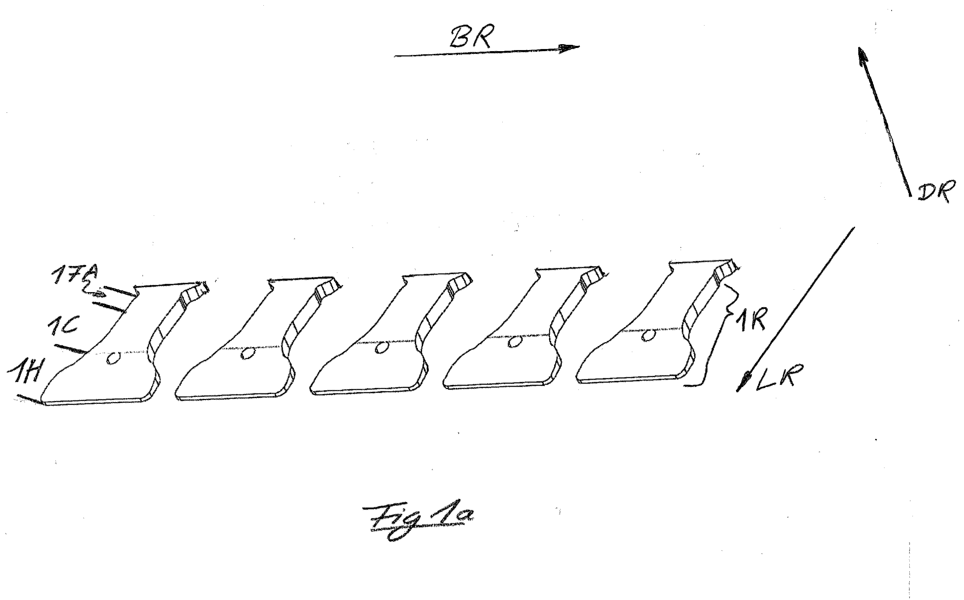

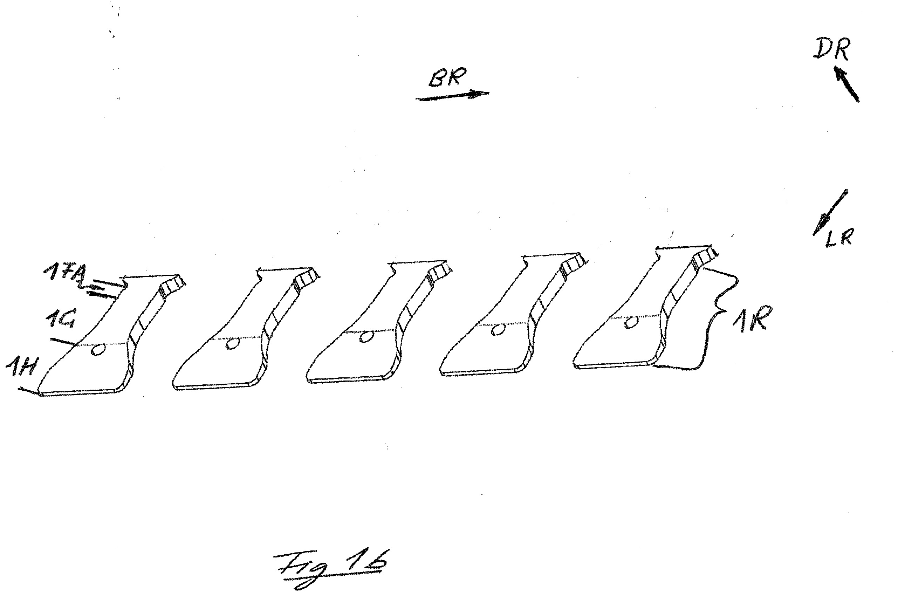

Die Fig. 1a) und 1b) zeigen Cliprohlinge 1R aus einem Formgedächtnismaterial, vorliegend aus einer superelastischen NiTi-Verbindung, um aus diesen Clips 1 für Brackets eines Oberkiefers (Fig. 1a) bzw. Brackets eines Unterkiefers (Fig. 1b) herzustellen. Mit anderen Worten sind die Cliprohlinge der Fig. 1 Abwicklungen des Clips 1.

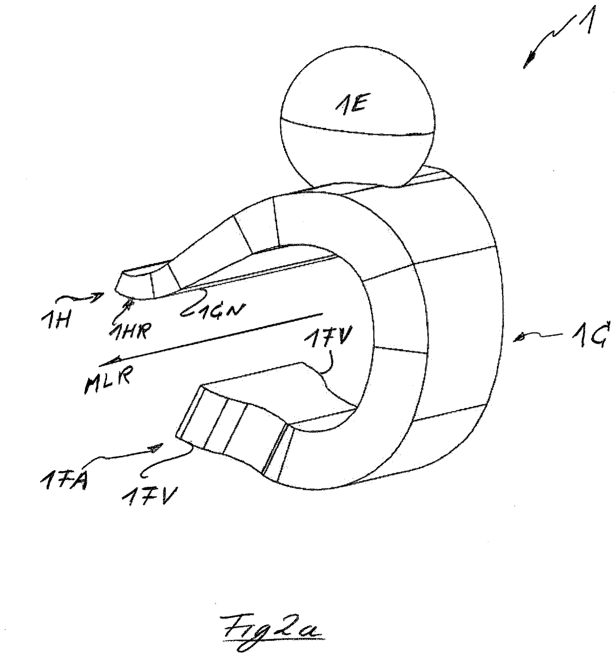

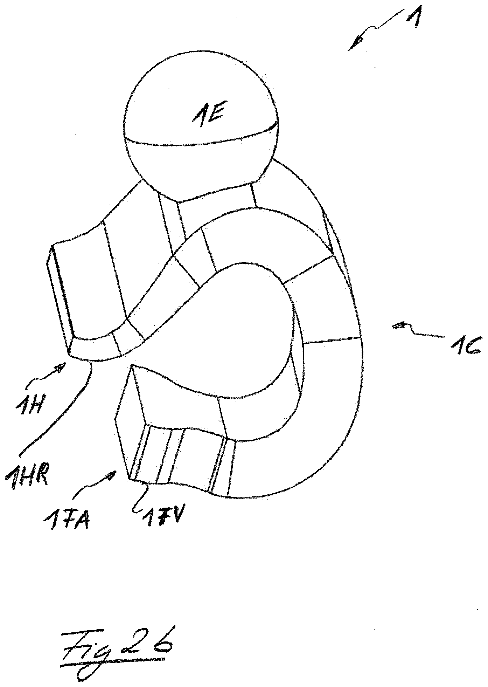

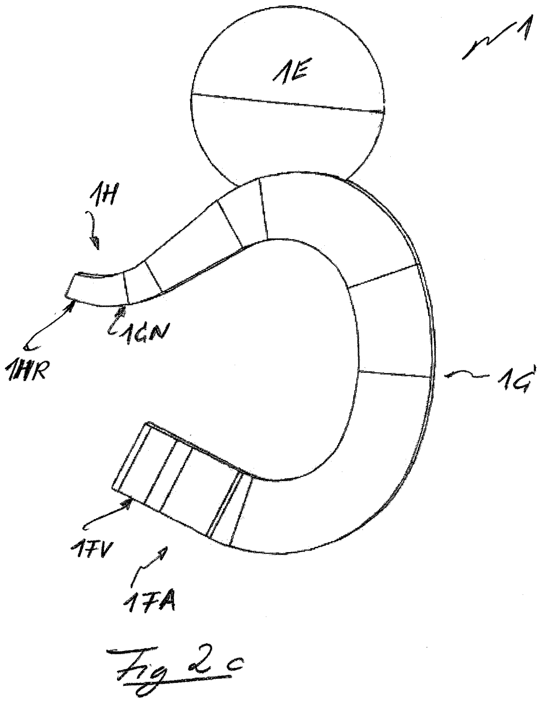

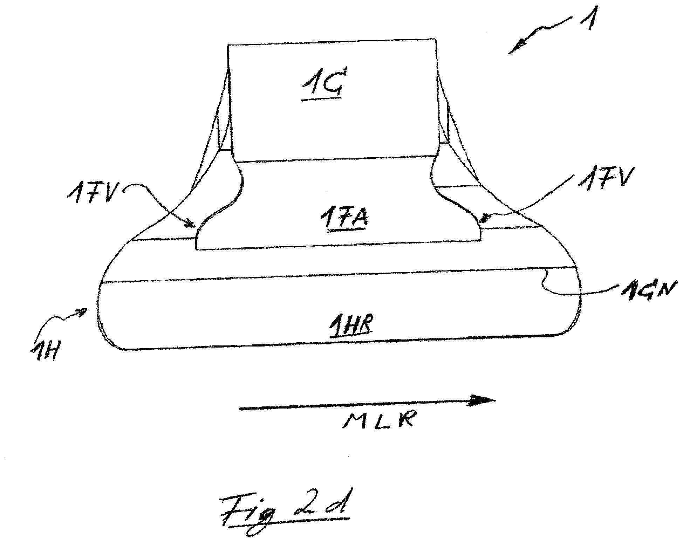

In Fig. 1a) und 1b) sind jeweils fünf Cliprohlinge 1R gezeigt. Die Cliprohlinge 1R weisen bereits eine Halteauflage 1H, einen Führungsabschnitt 1FA und zwischen diesen einen C-Form-Abschnitt 1C auf, die auch in dem Clip 1 vorhanden sind, wie folgend unter Bezug auf Fig. 2 beschrieben.

Ein Cliprohling 1R der Fig. 1a), d.h. ein Cliprohling 1R für ein Oberkieferbracket, weist eine Länge von 3,5mm entlang der Längsrichtung LR, eine Dicke von 0,3mm entlang der Dickenrichtung DR und eine Breite von 1,1mm entlang der Breitenrichtung BR auf.

Ein Cliprohling 1 der Fig. 1b), d.h. Cliprohling 1 für ein Unterkieferbracket, weist eine Länge von 3,5mm entlang der Längsrichtung LR, eine Dicke von 0,3mm entlang der Dickenrichtung DR und eine Breite von 0,9mm entlang der Breitenrichtung BR auf.

Die Halteauflagen 1H der Cliprohlinge 1R der Fig. 1a) und 1b) weisen am Übergang in die C-Form 1C eine Dicke von 0,3mm und am freien Ende eine Dicke von 0,1mm auf, wobei die Dicke in Längsrichtung linear abnimmt. Die Breite der Halteauflagen 1H der Cliprohlinge 1R der Fig. 1a) und 1b) beträgt am freien Ende 2,6mm. Eine Länge der Halteauflagen 1H der Cliprohlinge 1R der Fig. 1a) und 1b) beträgt 1,2mm in Längsrichtung LR.

In einer nicht dargestellten Backform werden die Cliprohlinge 1R der Fig. 1a) und 1b) gebacken. Dabei werden die Cliprohlinge 1R in die in Fig. 2 gezeigte Form der Clips 1 programmiert.

Anschließend wird ein Eingriffabschnitt 1E an dem Cliprohling 1R geschaffen, vorliegend eine Kugel an diesen fixiert, um an diesem im späteren Einsatz bspw. eine Ligatur oder ein Gummi zu fixieren. Es ergibt sich der erfindungsgemäße Clip 1 der Fig. 2.

In Fig. 2a) ist eine erste perspektivische und in Fig. 2b) eine zweite perspektivische Ansicht, in Fig. 2c) eine Seitenansicht und in Fig. 2d) eine Druntenansicht eines erfindungsgemäßen Clips 1 gezeigt.

An einem in Fig. 2a) unteren Ende des Clip 1 ist der Führungsabschnitt 1FA gebildet. Dieser umfasst zwei Führungsvorsprünge 1FV, die in medial-lateraler-Richtung MLR gegenüberliegenden Seiten des Führungsabschnitts 1FA gebildet sind und sich in medial-lateraler-Richtung MLR gegenüberliegen. Die Führungsvorsprünge 1FV stehen in medial-lateraler-Richtung MI,R jeweils 0,2mm vor, s. insbesondere Fig. 2d).

An einem in Fig. 2a) oberen Ende des Clips 1 ist die Halteauflage 1H gebildet. Wie insbesondere in Fig. 2c) gezeigt, nimmt eine Dicke der Halteauflage zum freien Ende hin ab, wie bereits zu Fig. 1 beschrieben. Das freie Ende des Halteauflage 1H ist in Fig. 2c) unter Bildung einer Halteauflagenrampe 1HR nach oben geschwungen. Sowohl die Abnahme der Dicke der Halteauflage 1H zum freien Ende hin als auch die Halteauflagenrampe 1HR dienen dazu, das Aufschieben der Halteauflage 1H auf ein Bracket oder einen kieferorthopädischen Draht zu erleichtern, wie weiter unten beschrieben.

Wie insbesondere in Fig. 2d) gezeigt, steht die Halteauflage 1H in medial-lateraler-Richtung MLR zu beiden Seiten des C-Form-Abschnitt 1C deutlich über diesen hinaus. Diese Breite der Halteauflage 1H dient dem Halten des kieferorthopädischen Drahts 5 in einem Slot, wie weiter unten beschrieben.

An der in Fig. 2a) tiefsten Stelle der Unterseite der Halteauflage 1H ist eine Cliprampennase 1CN gebildet. Die Cliprampennase 1CN ist als in medial-lateraler-Richtung MLR linienförmig verlaufender Vorsprung gebildet, der zum Verrasten an einem Bracketbody 3B in einer Freigabestellung dient, um den Clip 1 in der Freigabestellung an dem Bracketbody 3B zu halten, wie weiter unten beschrieben.

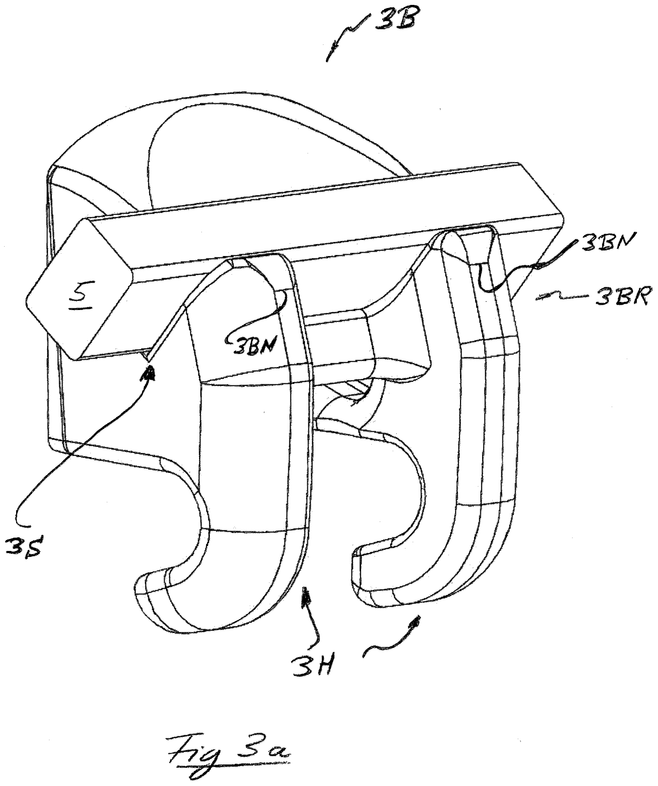

Fig. 3a) zeigt eine perspektivische Ansicht, b) eine Rückansicht und c) eine Seitenansicht eines Bracketbody 3B mit einem Slot 3S, wobei in dem Slot 3S ein Abschnitt eines kieferorthopädischen Drahtes 5 angeordnet ist.

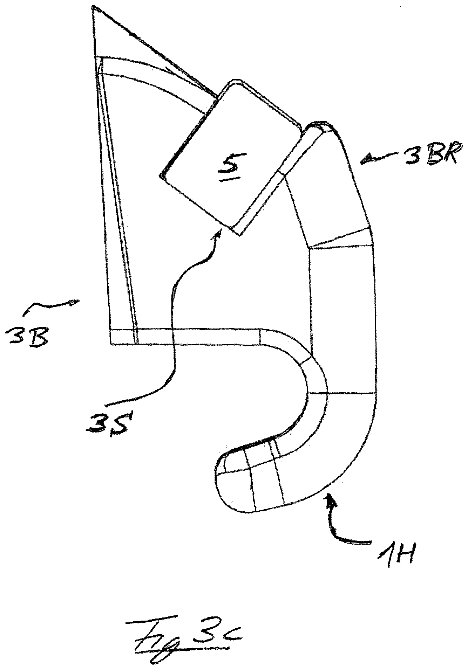

Der Draht 5 ist in dem Slot 3S nahezu spielfrei angeordnet, wie insbesondere in Fig. 3C gezeigt, Auf diese Weise kann die durch den Draht 5 auf den Slot 3S optimal übertragen werden, da ein guter Formschluss zwischen diesen vorliegt.

Der Bracketbody 3 weist zwei Hooks 3H, in Fig. 3a) unten, auf, um an diesen bspw. eine Ligatur oder Gummis zu befestigen.

Die in Fig. 3c) linear, von oben nach unten verlaufende, linke Seite des Bracketbody 3B ist vorgesehen, um an dieser ein Pad anzuordnen, wodurch aus dem Bracketbody 3B ein Bracket wird. Typischerweise wird das Pad auf einen Zahn eines Patienten geklebt, um das Bracket fest mit dem Zahn zu verbinden.

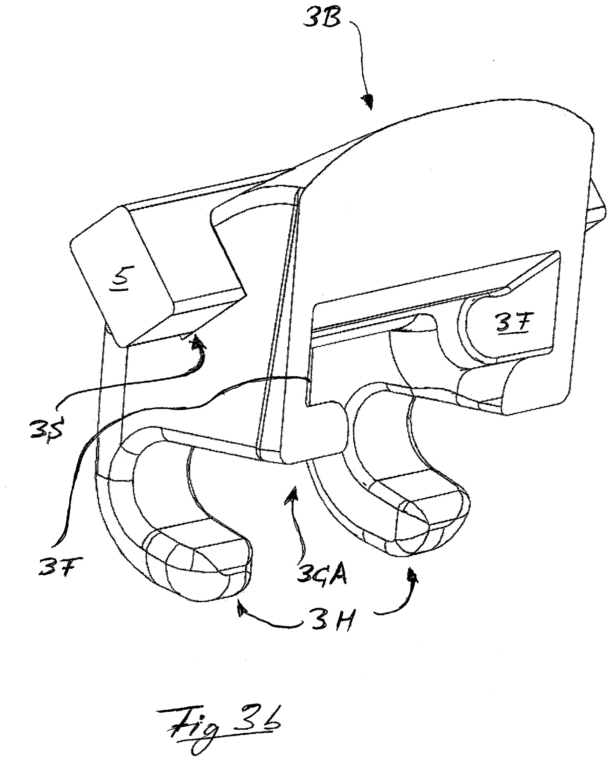

Wie in Fig. 3b dargestellt, weist der Bracketbody 3B in seinem Innenraum eine Clipaufnahme 3CA zur Aufnahme des in Fig. 2a) unteren Ende des Clips 1 auf. Die Clipaufnahme 3CA umfasst dabei zwei sich in medial-lateraler-Richtung MLR gegenüberliegende Führungskulissen 3F.

Betrachtet man eine Führungskulisse 3F aus medial-lateraler-Richtung MLR, s. insbesondere Fig. 3b), so weist die Führungskulisse die Form eines Dreieckstumpf auf: Das breite Ende des Dreieckstumpfs bildet ein freies Ende und dient dem Einfädeln des Führungsvorsprungs 1FV, in Fig. 3b rechts. Das schmale Ende des Dreieckstumpfs, in Fig. 3b, ist nahezu halbkreisförmig gebildet und bildet dadurch ein Schwenklager, um den Führungsvorsprung 1FV in diesem schwenkbar aufzunehmen. Dadurch ist der Führungsabschnitt 1FA um eine Achse schwenkbar in dem Bracketbody 3B gelagert, die in medial-lateraler-Richtung durch das schmale Ende der Führungskulisse 3F verläuft.

Am in Fig. 3a) oberen Ende eines jeden Hooks 3H ist eine Bracketbodyrampe 3BR gebildet, die ein Aufschieben der Halteauflage 1H des Clips 1 auf den Bracketbody 3B erleichtern soll.

Ferner ist am in Fig. 3a) unteren Ende einer jeden Bracketbodyrampe 3BR eine Bracketbodyhaltenase 3BN zum jeweiligen Eingriff mit der jeweils zugeordneten Cliprampennase 1CN eines mit dem Bracketbody 3B in Eingriff stehenden Clips 1 gebildet, um den Clip 1 in einer Freigabestellung an dem Bracketbody 3B zu halten.

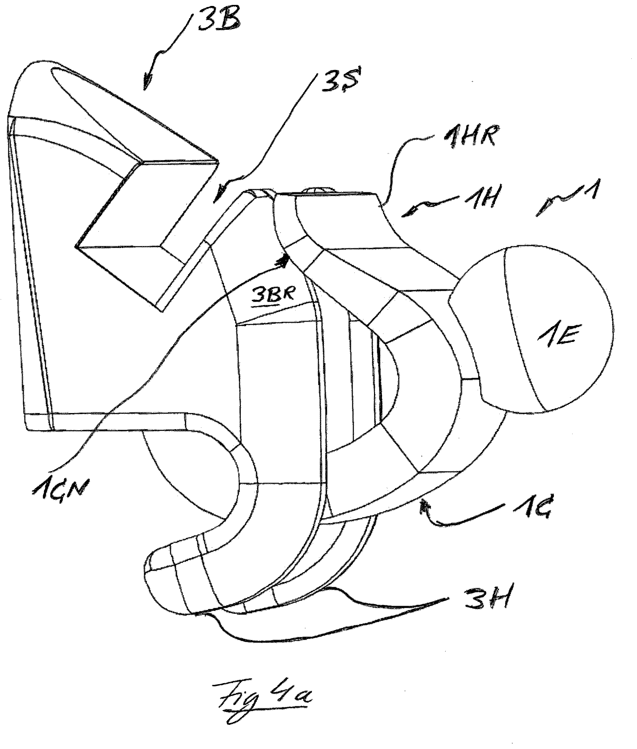

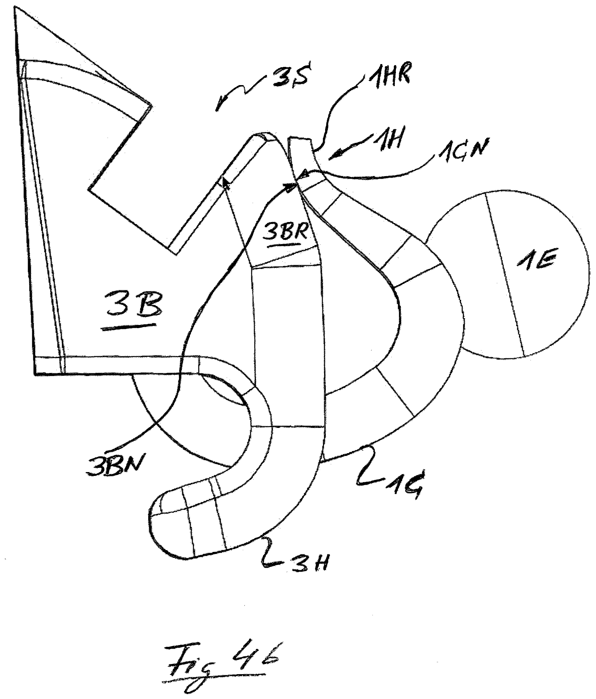

Die Fig. 4a) und 4b) zeigen den Clip 1 an dem Bracketbody 3B in einer Freigabestellung, in der ein Draht 5 in dem Slot 3S angeordnet werden kann. Die beiden Führungsvorsprünge 1FV sind in Eingriff mit dem jeweiligen schmalen Ende der Führungskulisse 3F. Die Cliprampennase 1CN ist in Eingriff mit den beiden Bracketbodyhaltenasen 3BN, wie insbesondere in Fig. 4b) dargestellt.

Der Clip 1 wird in die in Fig. 4) gezeigte Freigabestellung gebracht, indem zunächst die Führungsvorsprünge 1FV derart in die Clipaufnahme 3CA geführt werden, dass die Führungsvorsprünge 1FV jeweils in eine der beiden Führungskulissen 3F greifen, wobei das breite Ende des Dreieckstumpfs das Einführen erleichtern. Folgend wird der Clip 1 um die beiden Führungsvorsprünge 1FV verschwenkt, die in der Führungskulisse 3F angeordnet sind, und die Halteauflage 1H wird auf die Bracketbodyrampe 3BR aufgeschoben. Wie bereits oben beschrieben, erleichtern sowohl die Halteauflagenrampe 1HR als auch die zum freien Ende hin abnehmende Dicke der Halteauflage 1H das Aufschieben der Halteauflage 1H auf die Bracketbodyrampe 3BR. Das Aufschieben der Halteauflage 1H auf die Bracketbodyrampe 3BR erfolgt so weit, bis die Cliprampennase 1CN in Eingriff steht mit den beiden Bracketbodyhaltenasen 3BN, wodurch die beiden Nasen 1CN, 3BN miteinander verrasten. Es kommt dadurch zu der in Fig. 4 gezeigten Lage des Clips 1 am Bracketbody 3B, in der der Clip 1 stabil am Bracketbody 3B gehalten ist.

Das Verschwenken des Clip 1 und Aufschieben der Halteauflage 1H auf die Bracketbodyrampe kann in einfacher Weise dadurch erfolgen, dass der Finger eines Behandlers in Eingriff gebracht wird mit dem Eingriffabschnitt 1E, d.h. der Kugel, des Clips 1.

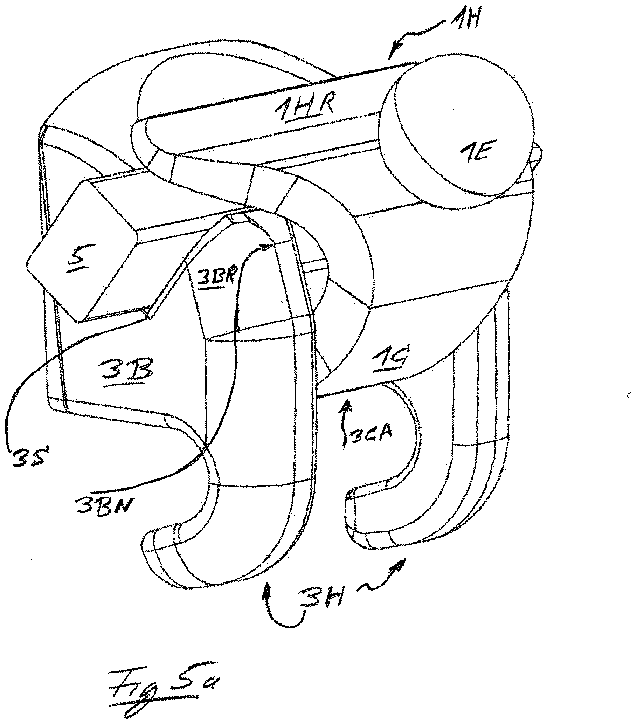

Um den Clip 1 aus der in Fig. 4) gezeigten Freigabestellung auf dem Bracketbody 3B in die in Fig. 5a) und 5b) gezeigte Schließstellung zu bewegen wird wie folgt vorgegangen:
Zunächst wird ein kieferorthopädischer Draht 5 in dem Slot 3 S des Bracketbody 3B angeordnet.

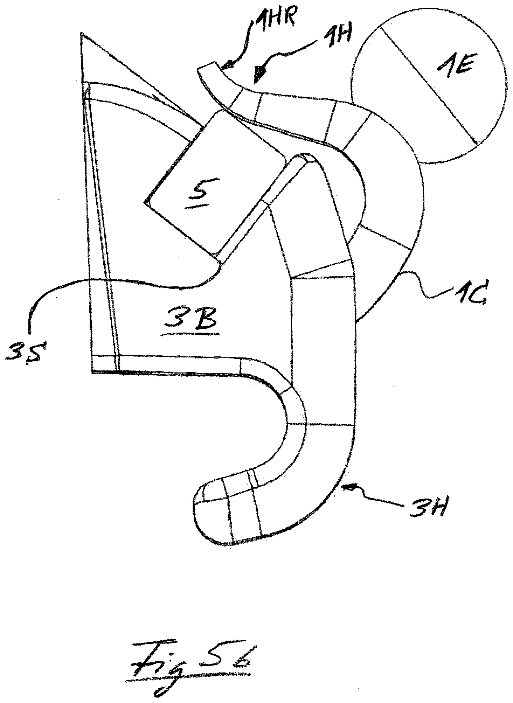

Folgend kann ein Finger eines Behandlers in Eingriff gebracht werden mit dem Eingriffabschnitt 1E, d.h. der Kugel, des Clips 1 und den Clip 1 weiter um die von den beiden Führungsvorsprüngen 1FV in der Führungskulisse 3F gebildete Achse verschwenken und somit die Halteauflage 1H in Richtung Draht 5 schieben, bis die Halteauflage 1H auf dem Draht 5 aufliegt, wie insbesondere in Fig. 5b) gezeigt.

Um den Clip 1 aus der in Fig. 5) gezeigten Schließstellung wieder in die in Fig. 4) gezeigte Freigabestellung zu überführen wird umgekehrt vorgegangen: Ein Finger eines Behandlers wird in Eingriff gebracht mit dem Eingriffabschnitt 1E, d.h. der Kugel, und die Halteauflage 1H wird von dem Draht 5 wieder in Richtung Bracketbodyhaltenase 3BN verschoben, bis die Cliprampennase 1CN in Eingriff ist mit der Bracketbodyhaltenase 3BN, wodurch die in Fig. 4) gezeigte Freigabestellung erreicht ist.

An der Schließstellung der Fig. 5 füllt der Draht 5 optimal den Slot 3 S aus, wie oben beschrieben. Ferner liegt die Halteauflage 1H fasst über die gesamte Länge des Bracketbody 3B in medial-lateraler-Richtung MLR auf dem Draht 5 auf, so dass der Clip 1 eine große Haltekraft auf den Draht 5 ausüben kann, um den Draht 5 in dem Slot 3 S zu halten. Beides trägt dazu bei, dass der Draht 5 in dem Slot 3S nicht kippen kann. Bei einem horizontalen Slot kommt es somit zu keiner Drehung des Drahts im Slot. Bei einem vertikalen Slot kommt es somit zu keiner Angulation des Drahts im Slot.

Vorteilhaft liegen sich die Führungsvorsprünge in medial-lateraler Richtung gegenüber und / oder stehen vorteilhaft 0,1 bis 0,8mm, insbesondere 0,2mm, vor.

Das Bracket kann ein Lingualbracket oder ein Bukkalbracket sein.

### Bezugszeichenliste

- 1: Clip
- 1C: C-Form-Abschnitt
- 1CN: Cliprampennase
- 1E: Eingriffabschnitt
- 1FA: Führungsabschnitt
- 1FV: Führungsvorsprung
- 1H: Halteauflage
- 1HR: Halteauflagenrampe
- 1R: Cliprohling
- 3B: Bracketbody
- 3BR: Bracketbodyrampe
- 3BN: Bracketbodyhaltenase
- 3CA: Clipaufnahme
- 3F: Führungskulisse
- 3H: Hook
- 3S: Slot
- 5: Draht

- BR: Breitenrichtung
- DR: Dickenrichtung
- LR: Längsrichtung
- MLR: medial-laterale-Richtung

## Patentansprüche

1. Bracket (3) mit einem C-förmigen Clip (1), wobei sich ein Ende der C-Form des Clips (1) in einen Führungsabschnitt (1FA) fortsetzt, der zum führenden Eingriff in eine Clipaufnahme (3CA) des Brackets (3) vorgesehen ist, um den Clip (1) schwenkbar an dem Bracket (3) zu halten, und sich das andere Ende der C-Form in eine sich in medial-lateral verbreiternde Halteauflage (1H) fortsetzt, um den kieferorthopädischen Draht (5) im Slot (3S) zu halten, mit einem Pad zur Verbindung mit einem Zahn eines Patienten und einem Bracketbody (3B) mit einem Slot (3S) zur Aufnahme eines kieferorthopädischen Drahts (5), wobei eine Clipaufnahme (3CA) zur Aufnahme des Führungsabschnitts (1FA) des Clips (1) in dem Bracketbody (3B) gebildet ist, **gekennzeichnet durch** zwei sich in medial-lateraler-Richtung gegenüberliegende, im Bracketbody gebildete Führungskulissen (3F), um in der jeweiligen Führungskulisse (3F) den zugeordneten Führungsvorsprung (1FV) aufzunehmen, wobei die Führungskulisse (3F) aus medial-lateraler Richtung die Form eines Dreieckstumpf aufweist, so dass das breite Ende dem Einfädeln des Führungsvorsprungs und das schmale Ende dem Verschwenken des Clips um das schmale Ende dient.

2. Bracket nach einem der vorangehenden Ansprüche, **dadurch gekennzeichnet, dass** der Bracketbody (3B) eine Bracketbodyrampe (3BR) zum Aufschieben der Halteauflagerampe (1HR) aufweist.

3. Bracket nach dem vorangehenden Anspruch, **dadurch gekennzeichnet, dass** die Bracketbodyrampe (3BR) eine Bracketbodyhaltenase (3BN) zum Zusammenwirken mit einer Cliprampennase (1CN), insbesondere am Übergang Halteauflagenrampe zu C-Form des Clips, aufweist, um den Clip (1) im geöffneten Zustand am Bracket (3) zu halten, wobei in diesem Zustand der Führungsabschnitt (1FA) des Clips (1) in Eingriff mit der Clipaufnahme (3CA) des Brackets (3) steht, so dass der Clip durch seine C-Form elastisch am Bracket gehalten ist.

4. Bracket nach einem der vorangehenden Ansprüche, **dadurch gekennzeichnet, dass** der Führungsabschnitt (1FA) des Clips (1) einen in medialer Richtung und einen in lateraler Richtung vorstehenden Führungsvorsprung (1FV) aufweist, wobei sich die Führungsvorsprünge (1FV) in medial-lateraler Richtung gegenüberliegen und / oder 0,1 bis 0,8mm, insbesondere 0,2mm, vorstehen.

5. Bracket nach einem der vorangehenden Ansprüche, **dadurch gekennzeichnet, dass** sich eine Dicke der Halteauflage (1H) des Clips (1) in Richtung des freien Endes verringert, insbesondere linear, um die Halteauflage (1H) elastisch zu bilden und ein Aufschieben der Halteauflage (1H) auf den kieferorthopädischen Draht (5) bzw. das Bracket zu erleichtern.

6. Bracket nach einem der vorangehenden Ansprüche, **dadurch gekennzeichnet, dass** die Halteauflage (1H) des Clips (1) eine in kaudaler Richtung gebogene Halteauflagenrampe (1HR) aufweist, um ein Aufschieben der Halteauflage (1H) auf den kieferorthopädischen Draht (5) bzw. das Bracket zu erleichtern.

7. Bracket nach einem der vorangehenden Ansprüche, **dadurch gekennzeichnet, dass** Halteauflage (1H) des Clips (1) einen Eingriffabschnitt (1E), insbesondere als Vorsprung gebildet, bspw. als Kugel oder Haken, aufweist, um ihn in Eingriff mit einem Gummi oder einer Ligatur zu bringen und/oder um das Ende des Clips, das die Halteauflage (1H) aufweist, von dem Bracket (3) weg zu bewegen, insbesondere weg zu schieben, oder auf das Bracket (3) hin zu bewegen, insbesondere auf das Bracket (3) zu schieben, um so den Clip (1) zu öffnen oder zu schließen, insbesondere per Hand.

8. Bracket nach einem der vorangehenden Ansprüche, **dadurch gekennzeichnet, dass** ein OK-Clip (1) eine Länge von 2-8mm, insbesondere 3,5mm, und/oder eine Dicke von 0,2 bis 0,6mm, insbesondere von 0,3mm, und/oder eine Breite von 0,5 bis 2,5mm, insbesondere 1,1mm, und ein UK-Clip eine Länge von 2-8mm, insbesondere 3,5mm, und/oder eine Dicke von 0,2 bis 0,6mm, insbesondere von 0,3mm, und/oder eine Breite von 0,5 bis 2,5mm, insbesondere 0,9mm, aufweist.

9. Bracket nach einem der vorangehenden Ansprüche, **dadurch gekennzeichnet, dass** die Halteauflage (1H) des Clips (1) am Übergang in die C-Form eine Dicke von 0,2 bis 0,6mm und am freien Ende eine Dicke von 0,05 bis 0,3mm, insbesondere 0,1mm, und / oder am freien Ende eine Breite von 1 bis 8mm, insbesondere 2,6mm, und eine Länge von 0,5 bis 3mm, insbesondere 1,2mm, aufweist.

10. Bracket nach einem der vorangehenden Ansprüche, **dadurch gekennzeichnet, dass** der Clip (1) aus einem Formgedächtnismaterial, insbesondere aus einer superelastischen NiTi-Legierung, besteht.

## Claims

1. A bracket (3) comprising a C-shaped clip (1), wherein one end of the C-shape of the clip (1) continues into a guide section (1FA) provided for guiding engagement with a clip receptacle (3CA) of the bracket (3) to pivotally retain the clip (1) on the bracket (3), and the other end of the C-shape continues into a medial-lateral widening retaining pad (1H) to retain the orthodontic wire (5) in the slot (3S), with a pad for connection to a patient's tooth and a bracket body (3B) with a slot (3S) for receiving an orthodontic wire (5), wherein a clip receptacle (3CA) for receiving the guide section (1FA) of the clip (1) is formed in the bracket body (3B), **characterized by** two guide slots (3F) which are opposite one another in the medial-lateral direction and are formed in the bracket body, to receive the associated guide projection (1FV) in the respective guide slot (3F), wherein the guide slot (3F) has the shape of a triangular frustum from the medial-lateral direction, so that the wide end serves to thread in the guide projection and the narrow end serves to swivel the clip about the narrow end.

2. Bracket according to one of the preceding claims, **characterized in that** the bracket body (3B) has a bracket body ramp (3BR) for pushing on of the retaining support ramp (1HR).

3. Bracket according to the preceding claim, **characterized in that** the bracket body ramp (3BR) has a bracket body retaining nose (3BN) for interacting with a clip ramp nose (1CN), in particular at the transition from the retaining support ramp to the C-shape of the clip, in order to hold the clip (1) in the open state on the bracket (3), wherein in this state the guide section (1FA) of the clip (1) is in engagement with the clip receptacle (3CA) of the bracket (3), so that the clip is held elastically on the bracket by its C-shape.

4. Bracket according to one of the preceding claims, **characterized in that** the guide section (1FA) of the clip (1) has a guide projection (1FV) projecting in the medial direction and a guide projection (1FV) projecting in the lateral direction, the guide projections (1FV) lying opposite one another in the medial-lateral direction and/or projecting by 0.1 to 0.8 mm, in particular 0.2 mm.

5. Bracket according to one of the preceding claims, **characterized in that** a thickness of the retaining support (1H) of the clip (1) is reduced in the direction of the free end, in particular linearly, in order to form the retaining support (1H) elastically and to facilitate sliding of the retaining support (1H) onto the orthodontic wire (5) or the bracket.

6. Bracket according to one of the preceding claims, **characterized in that** the retaining support (1H) of the clip (1) has a retaining support ramp (1HR) curved in the caudal direction in order to facilitate sliding the retaining support (1H) onto the orthodontic wire (5) or the bracket.

7. Bracket according to one of the preceding claims, **characterized in that** the retaining support (1H) of the clip (1) has an engagement section (1E), in particular formed as a projection, for example as a ball or hook, in order to bring it into engagement with a rubber or a ligature and/or in order to move the end of the clip, which has the retaining support (1H), away from the bracket (3), in particular to push it away, or to move it towards the bracket (3), in particular to push it onto the bracket (3), in order thus to open or close the clip (1), in particular by hand.

8. Bracket according to one of the preceding claims, **characterized in that** an upper jaw clip (1) has a length of 2-8mm, in particular 3.5mm, and/or a thickness of 0.2 to 0.6mm, in particular 0.3mm, and/or a width of 0.5 to 2.5mm, in particular 1.1mm, and a lower jaw clip has a length of 2-8mm, in particular 3.5mm, and/or a thickness of 0.2 to 0.6mm, in particular 0.3mm, and/or a width of 0.5 to 2.5mm, in particular 0.9mm.

9. Bracket according to one of the preceding claims, **characterized in that** the retaining support (1H) of the clip (1) has a thickness of 0.2 to 0.6mm at the transition into the C-shape and a thickness of 0.05 to 0.3mm, in particular 0.1mm, at the free end and/or a width of 1 to 8mm, in particular 2.6mm, and a length of 0.5 to 3mm, in particular 1.2mm, at the free end.

10. Bracket according to one of the preceding claims, **characterized in that** the clip (1) consists of a shape memory material, in particular of a superelastic NiTi alloy.

## Revendications

1. Bracket (3) comprenant un clip (1) en forme de C, une extrémité de la forme en C du clip (1) se prolongeant par une partie de guidage (1FA) prévue pour s'engager de manière guidée dans un logement de clip (3CA) du bracket (3) afin de maintenir le clip (1) de manière pivotante sur le bracket (3), et l'autre extrémité de la forme en C se prolonge par un support de maintien (1H) s'élargissant dans le sens médial-latéral pour maintenir le fil orthodontique (5) dans la fente (3 S), avec une pastille pour la liaison avec une dent d'un patient et un corps de bracket (3B) avec une fente (3S) pour recevoir un fil orthodontique (5), un logement de clip (3CA) étant formé dans le corps de bracket (3B) pour recevoir la section de guidage (1FA) du clip (1), **caractérisé par** deux coulisses de guidage (3F) formées dans le corps de bracket et se faisant face dans la direction médiale-latérale, pour recevoir dans la coulisse de guidage (3F) respective la saillie de guidage (1FV) associée, la coulisse de guidage (3F) présentant, à partir de la direction médiale-latérale, la forme d'un triangle tronqué, de sorte que l'extrémité large sert à enfiler la saillie de guidage et l'extrémité étroite à faire pivoter le clip autour de l'extrémité étroite.

2. Bracket selon l'une des revendications précédentes, **caractérisé en ce que** le corps de bracket (3B) présente une rampe de corps de bracket (3BR) pour faire glisser la rampe d'appui de maintien (1HR).

3. Bracket selon la revendication précédente, **caractérisé en ce que** la rampe de corps de bracket (3BR) comporte un ergot de maintien de corps de bracket (3BN) destiné à coopérer avec un ergot de clip (1CN), notamment à la jonction entre la rampe de support de maintien et la forme en C du clip, pour maintenir le clip (1) à l'état ouvert sur le bracket (3), dans cet état, la partie de guidage (1FA) du clip (1) est en prise avec le logement de clip (3CA) du bracket (3), de sorte que le clip est maintenu élastiquement sur le bracket par sa forme en C.

4. Bracket selon l'une des revendications précédentes, **caractérisé en ce que** la section de guidage (1FA) du clip (1) présente une saillie de guidage (1FV) faisant saillie dans la direction médiale et une saillie de guidage (1FV) faisant saillie dans la direction latérale, les saillies de guidage (1FV) étant opposées dans la direction médiale-latérale et/ou faisant saillie de 0,1 à 0,8 mm, en particulier de 0,2 mm.

5. Bracket selon l'une quelconque des revendications précédentes, **caractérisé en ce qu'**une épaisseur de l'appui de maintien (1H) du clip (1) diminue en direction de l'extrémité libre, notamment de manière linéaire, pour rendre l'appui de maintien (1H) élastique et faciliter l'enfilage de l'appui de maintien (1H) sur le fil orthodontique (5) ou le bracket.

6. Bracket selon l'une des revendications précédentes, **caractérisé en ce que** l'appui de maintien (1H) du clip (1) présente une rampe d'appui de maintien (1HR) courbée dans la direction caudale pour faciliter l'enfilage de l'appui de maintien (1H) sur le fil orthodontique (5) ou le bracket.

7. Bracket selon l'une des revendications précédentes, **caractérisée en ce que** le support de retenue (1H) du clip (1) comprend une partie d'engagement (1E), en particulier formée comme une protubérance, par exemple une boule ou une ligature. sous la forme d'une bille ou d'un crochet, pour l'amener en prise avec un caoutchouc ou une ligature et/ou pour éloigner, en particulier pour pousser, l'extrémité du clip qui comporte le support de retenue (1H) du support (3) ou pour la déplacer vers le support (3), en particulier pour la pousser sur le support (3), de manière à ouvrir ou à fermer le clip (1), en particulier manuellement.

8. Bracket selon l'une des revendications précédentes, **caractérisé en ce qu'**un clip mâchoire supérieure (1) présente une longueur de 2 à 8 mm, notamment de 3,5 mm, et/ou une épaisseur de 0,2 à 0,6 mm, notamment de 0,3 mm, et/ou une largeur de 0,5 à 2,5 mm, notamment de 1,1 mm, et un clip mâchoire inférieure présente une longueur de 2 à 8 mm, notamment de 3,5 mm, et/ou une épaisseur de 0,2 à 0,6 mm, notamment de 0,3 mm, et/ou une largeur de 0,5 à 2,5 mm, notamment de 0,9 mm.

9. Bracket selon l'une des revendications précédentes, **caractérisé en ce que** l'appui de maintien (1H) du clip (1) présente, à la transition vers la forme en C, une épaisseur de 0,2 à 0,6mm et, à l'extrémité libre, une épaisseur de 0,05 à 0,3mm, notamment 0,1mm, et/ou, à l'extrémité libre, une largeur de 1 à 8mm, notamment 2,6mm, et une longueur de 0,5 à 3mm, notamment 1,2mm.

10. Bracket selon l'une des revendications précédentes, **caractérisé en ce que** le clip (1) est constitué d'un matériau à mémoire de forme, en particulier d'un alliage NiTi superélastique.
